# EUROPEAN PATENT SPECIFICATION

(11) **EP 1 797 711 B1**
(45) Date of publication and mention of the grant of the patent: **28.08.2013**
(21) Application number: 05857342.9
(22) Date of filing: 05.10.2005
(51) Int. Cl.: H04N 5/225, H04N 5/235

(54) **LIGHT EMISSION CONTROL OF EXTERNAL FLASH FOR DIGITAL CAMERA**
LICHTEMISSIONSSTEUERUNG FÜR EXTERNEN DIGITALKAMERABLITZ
COMMANDE DE L'EMISSION LUMINEUSE DU FLASH EXTERIEUR D'UN APPAREIL PHOTOGRAPHIQUE NUMERIQUE

(30) Priority: 06.10.2004 JP 2004319845; 21.10.2004 JP 2004333726
(43) Date of publication of application: 20.06.2007
(60) Divisional application: 10182379.7
(73) Proprietor: Inon, Inc., Kamagura Kanagawa 247-0061 (JP)
(72) Inventor: TAKEMATSU, Yoshiyuki, Tokyo 41 (JP)
(74) Representative: Alton, Andrew
(86) International application number: PCT/IB2005/003482
(87) International publication number: WO 2006/092656

(56) References cited:
- US-A1- 2002 171 753
- US-A1- 2003 214 593
- US-A1- 2004 136 702
- US-B1- 6 366 737
- PATENT ABSTRACTS OF JAPAN vol. 2000, no. 24, 11 May 2001 (2001-05-11) & JP 2001 183726 A (NIKON GIJUTSU KOBO:KK; NIKON CORP), 6 July 2001 (2001-07-06)

## Description

Priority is claimed on Japanese Patent Applications 2004-319845 filed October 6, 2004 and 2004-333726 filed October 21, 2004.

### Background of the Invention

This invention relates to an improved control technology on a flash adapted to be externally attached to a digital camera of the type internally containing another flash.

Such a camera may be used both above ground and for underwater photography but since the effects of the present invention are believed to be more significant in the case of underwater photography, a situation of underwater use will be mainly explained but the invention is not limited to such applications.

When a digital camera (as well as a camera of an ordinary non-digital kind) is used for underwater photography, it is usually sealed inside a commercially available colorless transparent waterproof housing. The housing should be colorless and transparent because when the flash contained in the camera (hereinafter referred to as the internal flash of the camera) is used, the emitted light must pass through this housing to illuminate the objects to be photographed.

Underwater photography usually takes place where it is much darker than above the ground and hence stronger flash light is required. If an internal flash is used for this purpose, however, the flash light may be reflected by small objects floating in the water near the lens, preventing it to obtain a clear picture. This is referred to as a marine-snow phenomenon. With the use of an internal flash, furthermore, a center part of the obtained picture tends to become whitish such that the picture as a whole appears flat. Another problem with underwater photography is that the quantity of light available by the internal flash is sometimes not sufficient and the obtained picture tends to be underexposed.

Even in the case of above-ground commercial photography, the spotted light from the internal flash may be reflected from the object of photography to produce an undesirable effect. This is because the light emitting part of the flash is too close to the camera lens.

In view of the problems described above, it has been known to use an external flash adapted to detect light from the internal flash and to emit light by this detected signal. This is because the light emitting part of the external flash can be disposed farther away from the camera lens and hence the aforementioned problems associated with the use of the internal flash can be obviated or at least reduced and hence more desirable images can be obtained.

Among the external flashes, those with an automatic focusing function are commonly being used such that the quantity of light can be maintained uniform even if the object distance is varied. This is because operations are much simpler than the manual focusing type which requires a manual adjustment of light quantity according to the object distance.

When an automatic flash is used for a proper exposure, it is necessary to match the lens opening with the flash opening. In the above, the flash opening means the quantity of light and is usually written in terms of the lens opening value for easy reading. In other words, whenever the lens opening is varied, the flash opening value must also be varied. Moreover, if it is desired to correct the exposure, the flash opening value which has been matched to the lens opening must also be changed in the positive or negative direction. This makes the operation very complicated. For a correct operation, furthermore, the sensor of the automatic flash must be correctly oriented towards the object to be photographed.

The light quantity of the external flash may be controlled manually if fine adjustments of exposure are desired. This is an effective method when the distance between the camera and the target object to be photographed does not change significantly and the user has only to adjust the light quantity of the external flash once. If the single external flash is provided with both functions for automatic and manual operations, it becomes much easier to use.

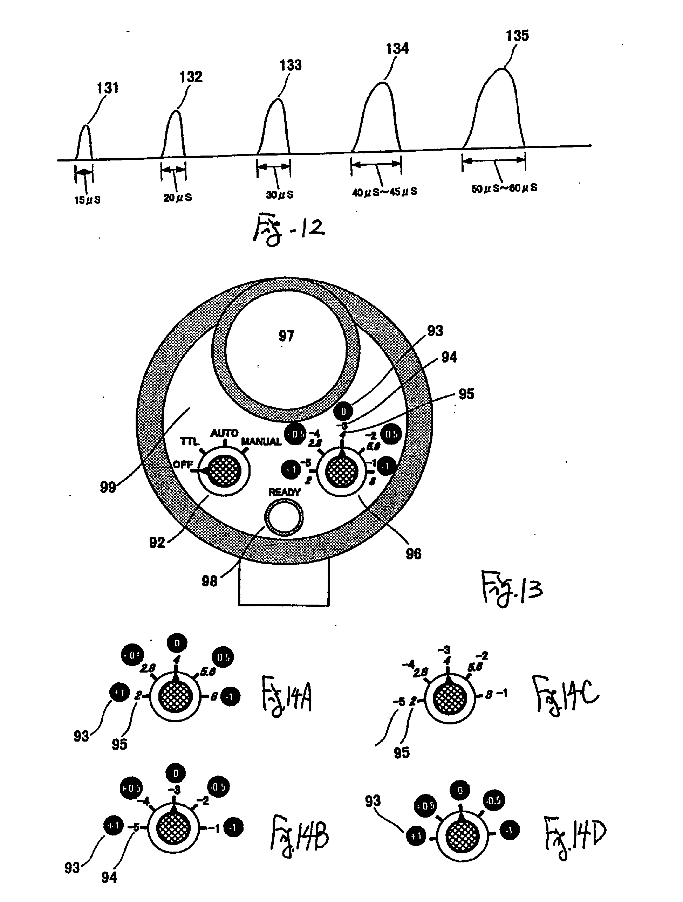

For use in underwater photography, all operation knobs on the external flash must be water-proof. Thus, it is desirable to reduce the number of such knobs and since there is only a limited space for providing them, the maximum number of such number is usually considered to be two (as in the example shown in Fig. 13). It is therefore desirable to provide each of these knobs as many functions as possible.

In what follows, it will be assumed that flashes are used for relatively short object distances of the order of 0.5m - 1.5m.

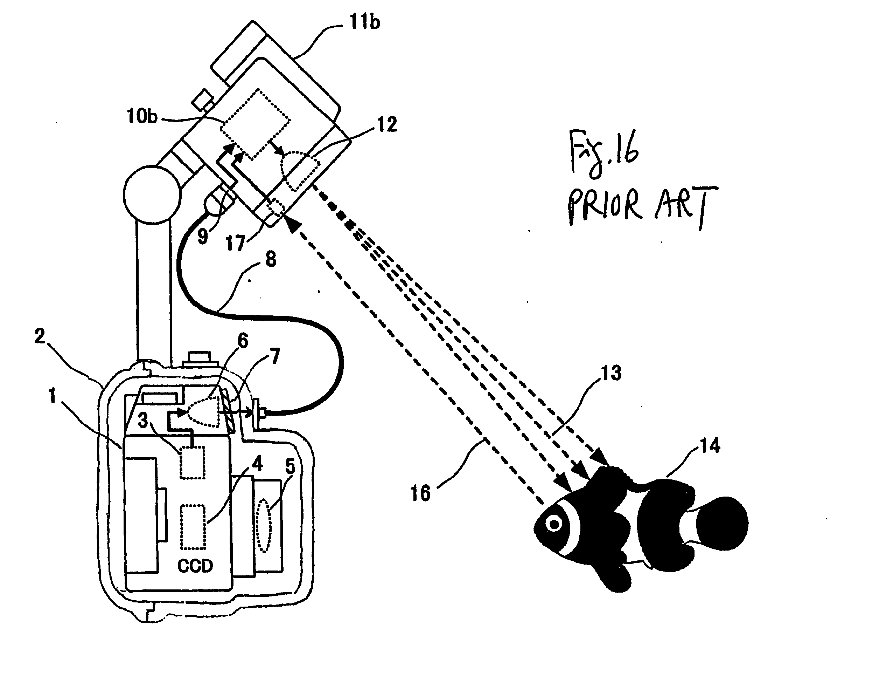

Fig. 16 shows a conventional flush control system for exampling a conventional control method for a digital camera 1 comprising a lens 5, a CCD 4, a control circuit 3 and a flash light emitting part 6, used inside a water-proof housing 2 in the case of an underwater photography. The housing 2 may not be required in the case of a use above the ground.

The water-proof housing 2 is provided with an external flash 11b of a prior art type. The light emission from the external flash 11b must be synchronized with the so-called X-junction of the camera 1 but most housings are not equipped with a synchronization cord terminal for connecting to the external flash 11b. This is because if such terminal were to be provided, its connecting part would also have to be waterproofed and also because there are cameras without a terminal for the X-junction and in such a case it is not possible to make a connection.

Fig. 16 shows a simple example of method not using any synchronization cord but using instead a filter 7 adapted to screen visible light from the internal flash, while allowing infrared light (inclusive of near infrared light) from the internal flash to pass through and leading it through an optical fiber 8 as light conducting means to a light detector circuit 9 such that the external flash 11b is caused to emit light by the signal detected by this light detector circuit (or a sensor) 9. If the distance between the internal flash and the outer flash is sufficiently short, the optical fiber 8 may not be required to serve as light conducting means because the infrared light (inclusive of near infrared light) from the internal flash may directly reach the light detector circuit 9 through air or water.

Next, the operation of the system of Fig. 16 is explained. As the shutter lever of the camera 1 is pressed, the internal flash 6 initially undergoes a preliminary light emission. At the same time, the light from the internal flash is lead through the optical fiber 8 to the light detector circuit 9, is thereby converted into an electrical signal and is led to a control circuit 10b of the external flash 11b.

The preliminary light emission is not anything that is required by the external flash 11b. Thus, the external flash 11b may be adapted to ignore its occurrence and not to emit any light as a result or to emit only a small amount of light that is negligible compared to the main light emission to be explained below.

About 100 milliseconds thereafter, simultaneously as the shutter is closed, the internal flash 6 is caused to undergo a main light emission. Since the aforementioned filter 7 is present, however, the light emitted as the main light emission does not illuminate the object (shown at 14) to be photographed but is led, like the light emitted as the preliminary light emission, to the light detector circuit 9. As the control circuit 10b judges this to be the main light emission, the external flash 11b is activated and emitted light 13 from a reflective mirror 12 is caused to illuminate the object 14 to be photographed. As reflected light 16 from the object 14 to be photographed is received by a sensor 17, it is thereby converted into an electrical signal. This electrical signal is integrated by an integrator circuit within the control circuit 10b and when the integrated value reaches a preliminarily specified value corresponding to an appropriate exposure, a signal is outputted from the control circuit 10b to stop the emission of light from the external flash 11b. This is how a properly exposed photograph is intended to be obtained.

In the case of a manual control, a resistor is used instead of the sensor 17 by a known method and its resistance value is varied to change the timing for stopping the light emission and thereby adjusting the light quantity for a proper exposure.

There are many problems with an apparatus as described above.

Firstly, as explained above, the lens opening and the flash opening must be matched for a proper exposure and this is a troublesome operation. Secondly, even after these openings are matched, the flash opening is required to be changed in the positive or negative direction and the operation is made cumbersome. Thirdly, the sensor 17 cannot receive the reflected light correctly from the object to be photographed unless the external flash is oriented to the center of the object to be photographed but the operation of setting the sensor is troublesome. Fourthly, the exposure changes when a filter or a converter lens is attached to the front of the camera lens but this change cannot be automatically corrected. Fifthly, although a zoom lens is usually attached to the camera and the image angles are different on the telephoto side and the wide-angle side, the light-receiving angle of the sensor 17 of the external flash 11b is fixed and hence an error may result in the measurement of the light. Sixthly, when the camera is set in a program mode, the lens opening and the shutter speed change according to the brightness of the surrounding but it is not a simple matter to adjust the external flash accordingly and it is difficult to make a proper exposure.

US 2002/0171753 describes a flash control system for controlling the amount of electrical energy used by external flash attached to a camera having an internal flash. The external flash has a detector for receiving a light signal from the internal flash to trigger the start of a preliminary emission and the start of a primary emission by the external flash. The preliminary and primary emissions of the external flash is controlled using a timing circuit and can operate in a manual or automatic mode. In an automatic mode, light reflected from a target object is detected and compared with a threshold value to determine when to turn off the external flash. In a manual mode, a gate voltage is integrated and compared to a level to determine when to turn off the external flash. The amount of energy used in the preliminary emission is controlled so that there is enough electrical power for the primary emission of the external flash.

It is therefore a general objective of the invention to provide an improved flash control system for a digital camera such that the control can be effected easily by a user even in the underwater environment and pictures of a high quality can be obtained.

According to the invention, there is provided a system comprising: a digital camera having an internal flash, said internal flash being adapted to undergo a preliminary light emission process and subsequently a main light emission process; and a flash control system for said digital camera comprising: an external flash, said external flash being external to said digital camera and adapted to emit light by a signal from a signal detecting means as said signal detecting means receives emitted light from said internal flash; light screening means for preventing light emitted from said internal flash from illuminating a target object to be photographed by said digital camera; light conducting means for conducting light from said internal flash to said external flash for causing emission of light from said external flash; preliminary emission starting means for causing said external flash to start preliminary emission of light by using as trigger a light emitting signal when said internal flash starts said preliminary light emission process; preliminary emission stopping means for causing said external flash to stop said preliminary emission of light by detecting the end of emission of light by said preliminary light emission process of said internal flash as trigger; main emission starting means for causing said external flash to start main emission of light by using as trigger another light emitting signal when said internal flash starts said main light emission process; main emission stopping means for causing said external flash to stop said main emission of light by detecting the end of emission of light by said main light emission process of said internal flash as trigger; and one or more discharge tubes included in the external flash and selected such that the flash time of the waveform of light emitted therefrom will be at most twice the flash time of the waveform of light emitted from said internal flash wherein said external flash includes either: a single discharge tube and either no choke coil or a choke coil with inductance less than 20 microhenries; or a plurality of discharge tubes connected in parallel, and either: each having an inner diameter of 1.9-2.1 mm and an arc length of 20mm or longer; or each having an inner diameter of 2.6mm or less and an arc length of 40mm or shorter.

### Brief Description of the Drawings

Fig. 1 is a schematic block diagram of a flash control system embodying this invention.
Fig. 2 is a variation of the embodiment shown in Fig. 1 with the sensor of the light detector circuit attached to one end of a cord.
Figs. 3A, 3B, 3C, 3D, 3E, 3F, 3G and 3H are examples of light screening means that may be used for the purpose of this invention.
Fig. 4 is a block circuit diagram of the flash control system of Fig. 1.
Figs. 5A and 5B, together referred to as Fig. 5, are waveform diagrams showing the operation of the control system of Fig. 4.
Figs. 6A, 6B and 6C, together referred to as Fig. 6, are waveform diagrams showing changes in waveform of preliminary light emission that may take place.
Fig. 7A and 7B, together referred to as Fig. 7, waveform diagrams of light emitted respectively from the internal and external flashes.
Fig. 8A shows two discharge tubes connected in parallel and Fig. 8B shows a single discharge tube connected to a choke coil in series for an external flash.
Figs. 9A and 9B are outer views and sectional views of discharge tubes with different acceptable dimensional relationships.
Fig. 10 is a block circuit diagram of another flash control system embodying this invention.
Fig. 11 is block circuit diagram of another flash control system embodying this invention.
Fig. 12 is a waveform diagram for showing changes in waveform effected by operations on the exposure correcting means of Fig. 11.
Fig. 13 is a view of an operating portion of an external flash of this invention for underwater photography.
Figs. 14A, 14B, 14C and 14D, together referred to as Fig. 14, are views of the knobs on the operating portion shown in Fig. 13.
Fig. 15 is a block circuit diagram of still another flash control system embodying this invention.
Fig. 16 is a block circuit diagram of a prior art flash control system.

### Detailed Description of the Invention

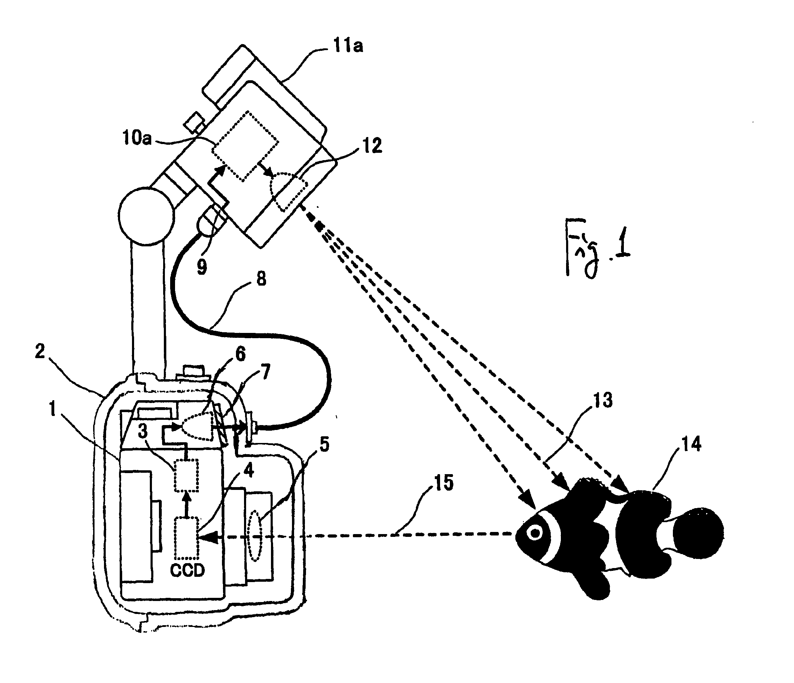

The invention is described next by way of examples. Fig. 1 shows an example of flash control system using a control method embodying this invention. Components that are similar or equivalent to those shown in Fig. 16 and explained above will be indicated by the same numerals and will not be repetitiously explained for the convenience of description.

As explained above, it is necessary according to this invention to generally prevent visible light from the internal flash to illuminate the object to be photographed. There are known methods and apparatus for this purpose including the use of a filter (such as shown at 7 in Fig. 16 and serving as a light screening means) adapted to screen visible light but to allow infrared and near infrared light to pass through, positioning it on the front surface of the internal flash.

Many examples of this type have been known and there are also situations where visible light need not be screened completely.

An external flash 11a is shown again positioned at some distance away from the camera 1 and adapted to receive signals through the aforementioned light screen means and an optical fiber 8 serving as light conducting means. As explained above, the optical fiber 8 may not be required if the internal and external flashes are sufficiently close to each other such that the infrared and near infrared light from the internal flash can easily reach the external flash 11a directly, using environmental air or water as the light conducting means.

According to the embodiment shown in Fig. 1, the filter 7 serving as the light screening means for screening visible light and passing infrared and near infrared light is preliminarily pasted onto the light emitting part 6 of the camera 1 before the camera 1 is placed inside its waterproof housing 2. This is the same also when the camera 1 is to be used above the ground. As a result, visible light is screened when emission of light takes place from the internal flash and does not leak to the exterior to cause the marine-snow phenomenon, but the infrared portion of the emitted light is allowed to pass through the filter 7 and reach the light detector circuit 9 through the optical fiber 8 to be converted to an electrical signal. As explained above, the optical fiber 8 may be dispensed with on occasions. The converted electrical signal is received by the control circuit 10a to control the emission of light from the external flash 11 a.

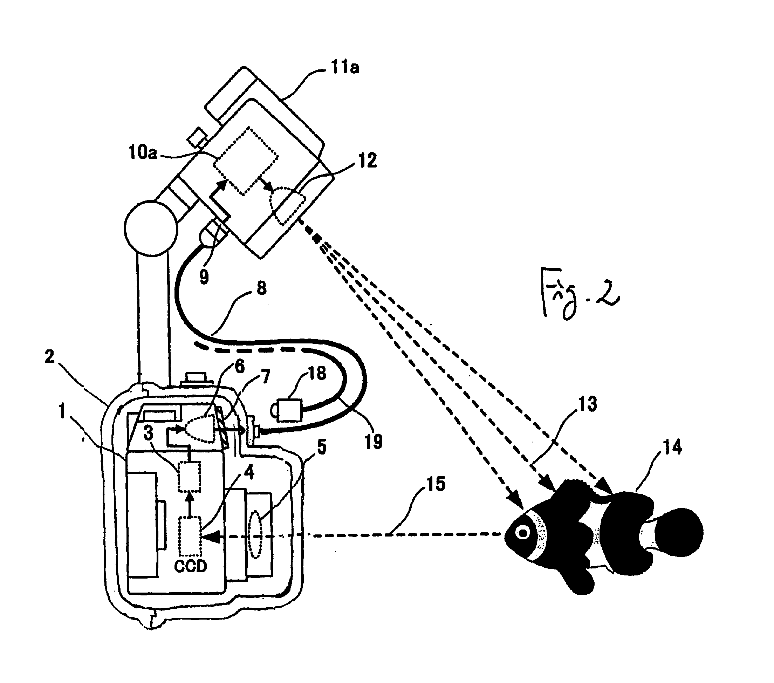

Fig. 2 shows a variation of the example shown in Fig. 1 wherein a sensor 18, which is a part of the light detector circuit 9 is attached to one end of a cord 19. This variation may be adopted when it is preferred not to use the optical fiber 8 as light conducting means.

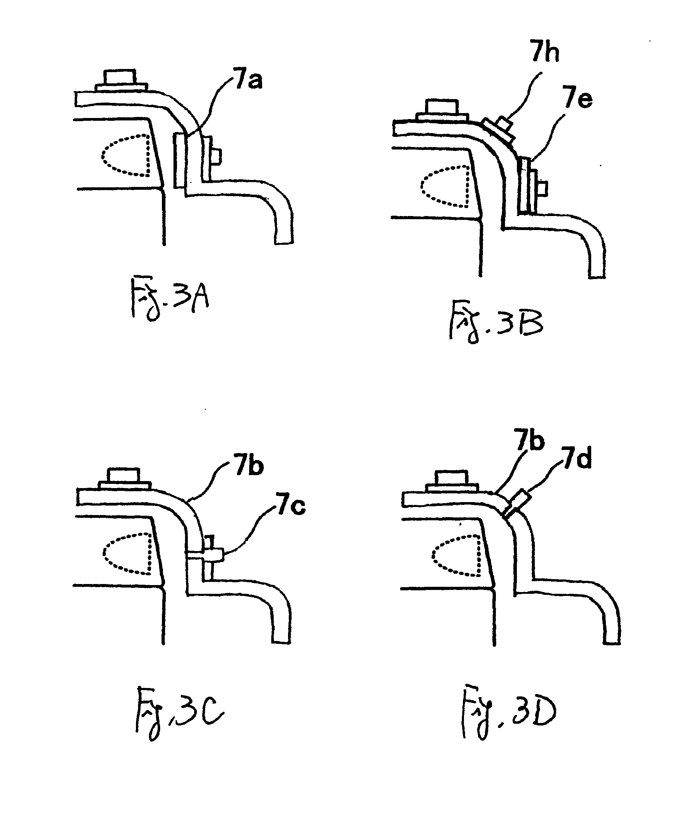

In the above, the position at which the filter 7 should be pasted on may be freely selected as long as an equivalent effect can be obtained. Fig. 3A shows an example wherein a filter 7a is pasted on the inner surface of the housing 2 and Fig. 3B shows another example wherein a filter 7e is on the outside surface of the housing 2. Figs. 3C and 3D are examples of a situation where the waterproof housing 2 is not transparent to visible light, showing the housing 2 itself serving as a light screening means 7b having a light-passing small hole 7c or 7d, respectively. Symbols 7h in Fig. 3B and 7d in Fig. 3D each indicate a light-passing opening to show that an opening for this purpose need not be provided exactly in front of the light-emitting reflecting mirror of the internal flash 6, as long as the opening serves to pass the emitted light therethrough and to reach the light detector circuit 9.

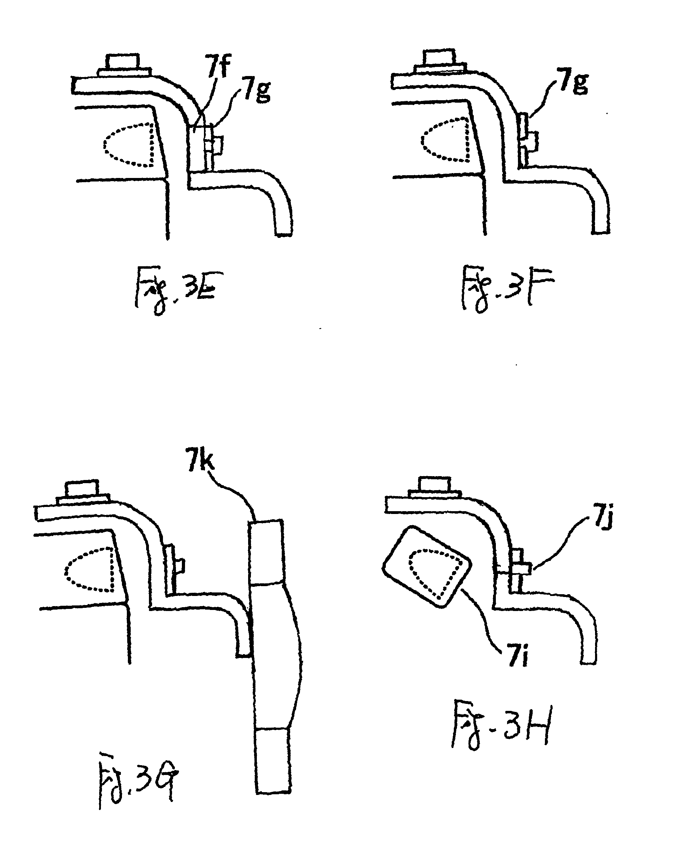

Fig. 3E shows still another example wherein the housing 2, whether it is of a transparent material or of a non-transparent material, is provided with a transparent window 7f. In such a case, a filter not transmitting visible light but allowing infrared and near infrared light to pass as explained above may be pasted on the front or back surface of this window 7f, or a light-screening fiber material or plate 7g with a light-passing hole may be provided. It now goes without saying that such light-screening fiber material or plate 7g may be positioned inside the window 7f, and that the window 7f need not necessarily be exactly in front of the light-emitting reflecting mirror of the internal flash 6, as explained above.

As explained above, the light screening means according to this invention include those that may allow a limited amount of light to leak through, as long as the effect on the photographed image is not significantly affected. Thus, a large variety of light screening means may be used according to this invention, including filters that allow to pass near infrared light close to the visible range, red filters or filters serving to reduce the quantity of passing light. In the latter case, those adapted to reduce the quantity of light to less than about 1/4 are effective.

The light screening means may be a molded product of a plastic resin material with the same or equivalent characteristics as described above so as to be formed in any desired shapes. The housing 2 may also comprise a resin material of the same characteristics.

The filter may be replaced by any light-screening object provided with a small hole. Fig. 3F shows such an example of a plate 7g with a hole on a transparent housing. Instead, a portion of light leaking through a gap may be adapted to be collected.

Fig. 3G shows a situation when a wide conversion lens or a close-up lens 7k is attached in front of the camera lens. Such an attachment lens usually has a larger radius and its peripheral part may serve to screen the light from the internal flash 6 and no light screening means may be additionally required.

There are cameras such as some single-lens reflective cameras with the internal flash adapted to pop up, pointing downward as shown at 7i in Fig. 3H before its light emitting part faces the forward direction completely. The light emitted therefrom is obstructed by the top portion of the camera and hardly reaches the object to be photographed while a portion may be collected, say, through an opening 7j.

Next, details of the control of light emission will be explained with reference mainly to Figs. 1, 4 and 5. Since a control of exposure by carrying out a preliminary light emission followed by a main light emission is currently most common, this type of control will be described. Commonly known portions of the control will be omitted for the convenience of description. In other words, the omission of a description does not mean the absence of the corresponding control.

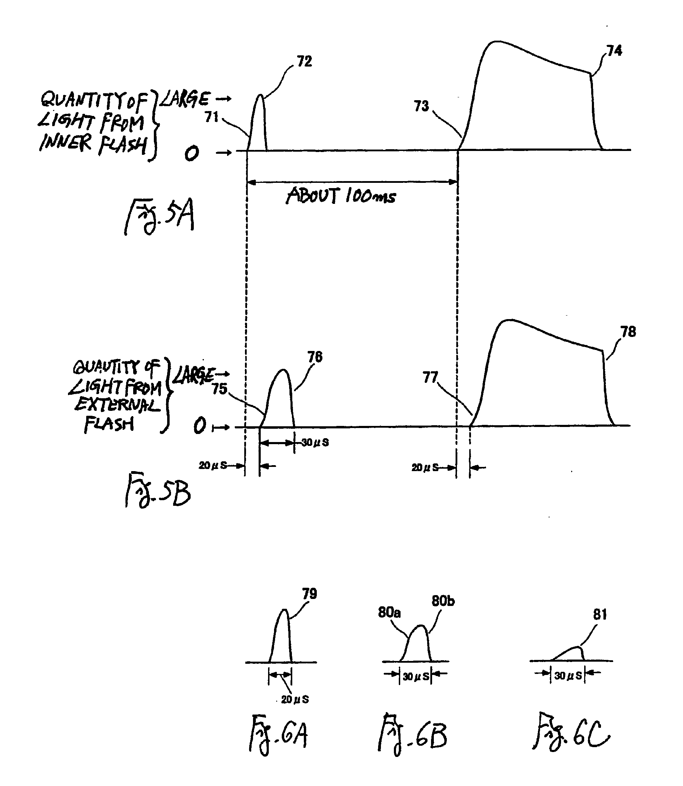

As a power switch 22 is closed (or switched on), power begins to be supplied from batteries 21, and a main capacitor 25 is charged by a step-up circuit 24. As the voltage of the main capacitor 25 reaches a specified level, a ready circuit 26 causes a display to be made to the effect that a preparation for light emission has been completed. If the shutter button of the camera is pressed thereafter, the internal flash 6 firstly undergoes a preliminary light emission. In Fig. 5, numerals 71 and 72 respectively shows the rise and fall of the waveform of this preliminary light emission. The light emitted from the internal flash 6 as the preliminary light emission is guided to the light detector circuit 9, say, through the optical fiber 8 serving as light conducting means.

Means for starting emission of light from the external flash 11a by using this preliminary light emission as its trigger is hereinafter referred to as the preliminary emission starting means and will be described next more in detail by way of an example.

The light detector circuit 9 comprises a photo-transistor 32 and a load resistor 33 and received light is thereby converted to an electrical signal. This electrical signal is inputted to an emission start signal detecting circuit 45 which is adapted to detect the rise of a signal, serving to detect the rise portion of a signal detected by capacitor 40, to AC- amplify it by transistor 41 and detecting it by transistor 43 through capacitor 42. As transistor 44 is further used as a buffer to input an emission start signal (as an ON signal) to a trigger 27 circuit, the trigger circuit 27 is thereby activated and the emission of light is started from a discharge tube 28.

As shown in Fig. 5A, the time of light emission from the internal flash 6 is very short (as shown at 71 and 72). The stopping of the light emission is effected by a falling signal 72 of light that is transmitted through the optical fiber 8 to the light detector circuit 9 and converted into an electrical signal by the same photo-transistor 32 referred to above. Although the same photo-transistor 32 is used according to the illustrated example for the detection of both the rise and the fall of light signal (or the start and the end of the light emission), two different photo-transistors may be used for the two separate purposes.

Means for stopping emission of light from the external flash 11a by using the end of this preliminary light emission as the trigger is hereinafter referred to as the preliminary emission stopping means and will be described next more in detail by way of an example.

The falling at the end of the preliminary light emission is detected by an emission stop signal detecting circuit 39, adapted to detect the edge of a falling by means of a differential capacitor 34 and to AC-amplify its signal by transistor 36 through capacitor 35. This AC-amplified signal is detected by transistor 38 through capacitor 37 to form an ON signal. This ON signal is inputted to an emission stop signal input circuit 30 and then to a light emission control circuit 29 to stop the emission of light from the discharge tube 28. Numeral 23 indicates a gate voltage generating circuit that serves to supply a necessary power to the emission stop signal input circuit 30 while the flash is emitting light.

The example illustrated above is not intended to limit the structure of the circuits for detecting the starting and stopping of light emission. Devices structured differently may be used as long as similar effects can be brought about. For example, circuits for digitally detecting the rising and falling, as well as IC circuits comprising an operational amplifier and a comparator, may be substituted.

A standard light emission from the external flash 11a is illustrated in Fig. 5B with numerals 75 and 76 respectively indicating the timing of the start and the end of the light emission. Some delays in time can be seen. The delay at the start is because the gas inside the discharge tube is not activated instantaneously, that is, for the reason of its physical characteristic.

In order to achieve the standard light exposure, a common method is to make the preliminary emission somewhat larger than by the internal flash because the total light quantity from the external flash is much greater but it is preferable to adjust the exposure by experimentation.

With the assumption of hardly any delay due to other electronic circuit components, the delay may be about 20 microseconds, as shown in Fig. 5B. Although this delay is illustrated in an exaggerated manner, it is really a negligibly small delay. Moreover, since the light from the internal flash does not reach the object to be photographed while the light from the external flash is received, there is no doubling of light from these two flashes.

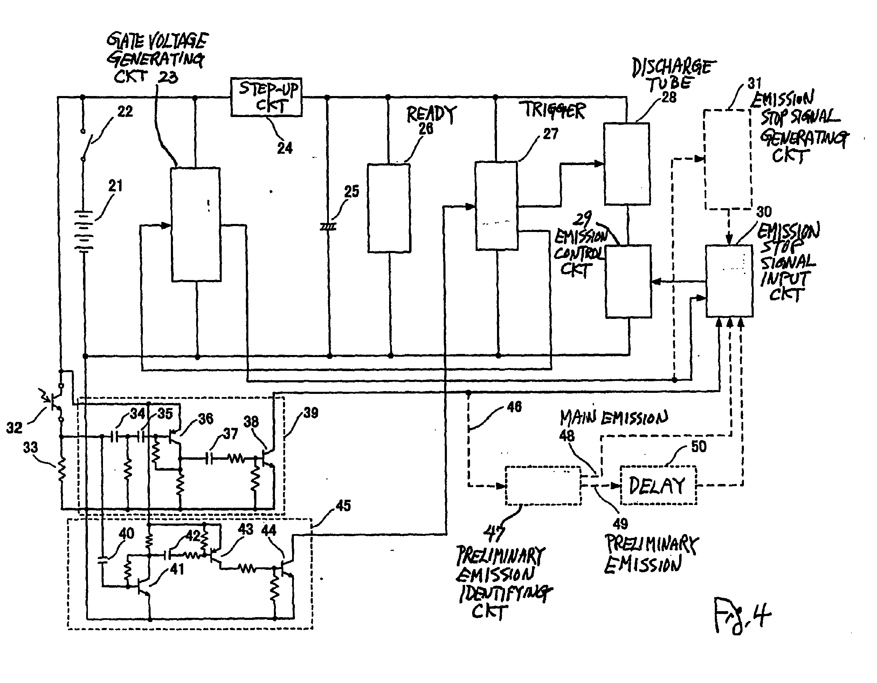

In order to reduce the operational delays, the electronic circuits are simplified as much as possible. Delay components such as bypass capacitors are either totally dispensed with or minimized. Fig. 4 shows an example where no bypass capacitor is employed.

The delay related to the stopping of light emission is smaller than that related to the starting of light emission. This is because a semiconductor element is used for stopping the light emission from the discharge tube. The speed of operation is fast and there is hardly any operational delay.

An insulated gate bipolar transistor (IGBT) is currently used as an element for this purpose. When the IGBT is switched off, the current that flows to the discharge tube is immediately shut off but the gas inside the discharge tube remains shining. In other words, there is an afterglow to some extent, but there is hardly any operational delay due to this afterglow.

The characteristics of the discharge tube and the operation time of the electric circuit may be adjusted so as to control the timing for stopping the light emission. By a fine adjustment, this timing may be adjusted so as to be as shown at 76 in Fig. 5B such that the flash time is nearly equal to that of the internal flash. Thus, the circuit for the camera may operate based on the same numerical data for the light emission from the internal flash without causing any trouble.

Next, as light 13 emitted as the preliminary emission hits an object 14 to be photographed and its reflection 15 is passed through the lens 5 of the camera 1, it is converted into an electrical signal by the CCD (CMOS) 4 and the amount of light for the main light emission to follow is calculated by the control circuit 3 according to the level of this electrical signal. The main light emission of the internal flash 6 starts about 100 milliseconds later as shown by numeral 73 in Fig. 5A. Light of this main light emission is guided to the light detector circuit 9 through the optical fiber 8 as explained above for the light of the preliminary light emission.

Means for starting the main light emission from the external flash by using the light of the main light emission from the internal flash as the trigger is hereinafter referred to as the main emission starting means. Its operations are the same as those of the preliminary emission starting means and the light emission is started as shown by numeral 77 in Fig. 5B.

The main light emission from the internal flash 6 is stopped thereafter when a specified amount of light has been emitted (for a desired exposure) as shown by numeral 74 in Fig. 5A.

Means for stopping the main light emission from the external flash by leading this light signal through the optical fiber 8 to the light detector circuit 9 and using the end of the main light emission from the internal flash as the trigger is hereinafter referred to as the main emission stopping means. The operations by the main emission stopping means are the same as those by the preliminary emission stopping means described above. The main light emission of the external flash is stopped as shown by numeral 78 in Fig. 5B. Since the external flash functions approximately in the same way as the internal flash, as explained above, an optimum exposure is possible although the light from the internal flash does not reach the object to be photographed.

Next, a method of and an apparatus for adjusting the flash time for the preliminary light emission from the external flash will be described. When an external flash is used, it is desirable to adjust the light quantity of its preliminary light emission to be as closely equal to that of the internal flash (when compared by a measuring instrument with the aforementioned light screening means removed) such that an exposure can be made accurate. Since the external flash is much bigger, however, the rise at the beginning of light emission tends to become gentler, as illustrated in Fig. 6 (comprising Figs. 6A, 6B and 6C).

If the preliminary light emission by the external flash can be made as shown at 79 in Fig. 6A by adjusting the circuits and the discharge tube as explained above, there is no need for any adjustment. If the rise is gentler and as shown at 80a in Fig. 6B and the light emission is stopped after 20 microseconds, the quantity of emitted light will be insufficient. In view of this problem, the time for stopping the preliminary light emission may be delayed although the end of the preliminary light emission by the internal flash is used as the trigger.

The circuit diagram of Fig. 4 includes circuits for this purpose (as means for delaying stopping of the preliminary emission). With reference again to Fig. 4, the preliminary light emission is started as an emission start signal is outputted from the emission start signal detecting circuit 45. Since the aforementioned delay is to be effected only for the preliminary light emission, a preliminary emission identifying circuit 47 is provided to identify a preliminary light emission by distinguishing it from a main light emission. Its function is to distinguish between an initially received light emission and a subsequently arriving light emission that is received about 100 microseconds later (between a signal 49 for starting a preliminary light emission and a signal 48 for starting a main light emission) and this is a well known kind of circuit.

The signal 49 corresponding to a preliminary light emission is transmitted to a delay circuit 50 and received by the emission stop signal input circuit 30 after a specified delay such as 10 microseconds in the case of the fall shown at 80b in Fig. 6B. The delay circuit may be of a known type such as comprising a capacitor and a resistor. The delay time should preferably be adjusted to an optimum value by carrying out tests.

The operations thereafter are the same as described above. Since no such delay is required on the main light emission, the signal therefor is not received by the delay circuit 50, as explained above. As a result, the main light emission is stopped without a delay. Such circuits may be formed as a digital circuit on the same operational principles or may be operated by a personal computer. In summary, the flash time by the external flash becomes longer as shown at 80b in Fig. 6B such that the quantity of emitted light becomes about the same as that from the internal flash.

Another simple method of delaying the stopping time of preliminary light emission is by delaying the operation of the emission stop signal detecting circuit 39 and this can be accomplished by adding a conventional integrating type of delay circuit using a resistor and a capacitor to the emission stop signal detecting circuit 39. In this case, the stopping of the light emission is delayed also for the main light emission since there is no preliminary emission identifying circuit 47 but it is sufficient as a simple delay circuit since the delay in the main light emission does not affect the exposure significantly.

If no such delay means is provided as in the prior art technology, the rise in the preliminary light emission may be further delayed as shown by numeral 81 in Fig. 6C and the flash system may cease to function properly.

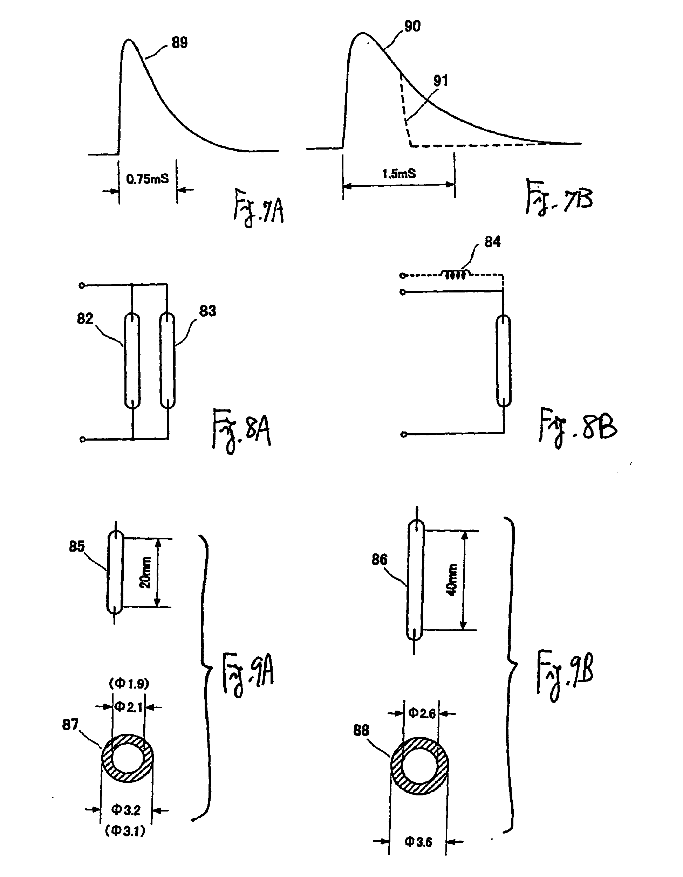

In order to make the external flash to function properly, means for shortening its rise time is necessary. As explained above, furthermore, the exposure becomes more accurate if the waveform of the light emission from the external flash is nearly the same as that from the internal flash. Although the light from the internal flash actually does not reach the object to be photographed, the present argument is on the assumption that it does. If the waveform of the light emission from the internal flash is as shown at 89 in Fig. 7A and that of the light emission from the external flash is as shown at 90 in Fig. 7B, for example, means for shortening the flash time is therefore needed.

Since the internal flash must be compact, its discharge tube is short and hence its flash time at the time of its full light emission is shorter than that for the external flash. Thus, it is desirable to provide means for shortening the flash time of the external flash so as to match that of the internal flash. The functions of these two means for shortening the rise time and the flash time are correlated with each other. If the flash time is shortened, for example, the rise time also becomes shorter.

These means and methods are explained next with reference to Figs. 8 and 9.

As explained above, internal flashes of all cameras are nearly equal and small. On the other hands, external flashes are meaningless unless they are made much more powerful than the internal flashes. In other words, discharge tubes of external flashes cannot be of the same size as those of internal flashes. If a discharge tube of about the same size were used for an external flash, the power input would be too strong and the tube would be damaged. In summary, discharge tubes much larger than those for internal flashes are required for external flashes. If a longer discharge tube is used, however, the flash time becomes longer and the rise time becomes accordingly slower.

The present inventor has carried out experiments and discovered that a parallel connection of two or more discharge tubes is highly effective. Fig. 8A shows such an example with two discharge tubes 82 and 83 connected in parallel. In such a connection, discharge tubes longer than those intended to be used singly may be used.

When a single discharge tube is used, the rise time becomes undesirably slow if a choke coil 84 is inserted in series as shown in Fig. 8B. In one aspect of the present invention, the external flash is characterized as having no choke coil inserted thereto. If a choke coil is to be inserted, it should be less than 20 microhenries (µH).

When a single discharge tube is used, it is desirable to make the arc length as short as possible but an arc length of 20mm or longer is necessary if the inner diameter is 2.1mm with outer diameter = 3.2mm (as shown at 85 and 87 in Fig. 9A) or 1.9mm (with outer diameter = 3.1mm). If it is shorter than this limit, the input power is excessively large to cause a damage. If the inner diameter is 2.6mm (with outer diameter = 3.6mm), an arc length of 40mm or less is necessary (as shown at 86 and 88 in Fig. 9B). If the length is greater that this limit, the flash time becomes too long and the rise time becomes too slow.

In summary, discharge tubes are selected such that the flash time will look as shown at 90 and at most twice that of the internal flash.

If it is desired to reduce the flash time of the external flash so as to approach that of the internal flash, it may be accomplished by way of an electric circuit, say, as shown in Figs. 4, 7A and 7B.

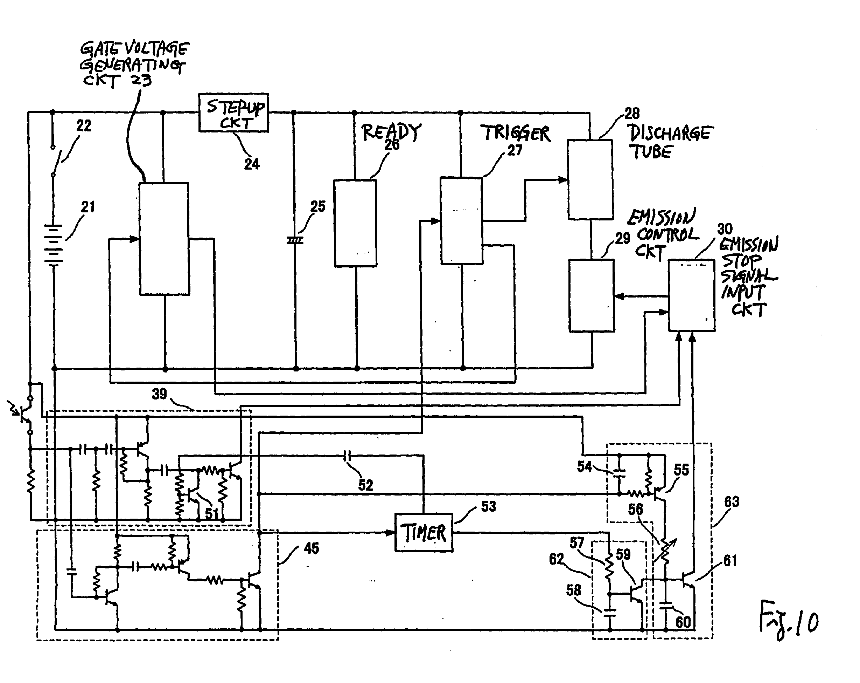

Internal flashes are intended to be compact. There are limits to their volume and dimensions, and their specifications are more or less the same for all cameras. Their flash time for full emission is generally about 0.75ms, as shown in Fig. 7A. The circuit shown in Fig. 10 is characterized as including an emission stop signal generating circuit 31 adapted to integrate the voltage values outputted from the gate voltage generating circuit 23 and to output an emission stop signal after a specified length of time has been elapsed. This stop signal is received by the emission stop signal input circuit 30 such that the emission of light is stopped as shown by 91 (instead of the full emission 90 which would normally last for 1.5ms) and an overexposure is prevented.

The control for the left-hand half of Fig. 7B (from the start of light emission to numeral 91) is carried out in the same way as by the prior art control. If the aforementioned function for limiting the flash time is made releasable, this function may be disabled when a large light quantity is necessary, say, when the target object to be photographed is at a large distance.

As explained above, the specifications of most internal flashes are more or less the same. This is because power should be saved for the occasion of the main emission and the power to be expended for the preliminary emission is minimized by all internal flashes. In other words, the flash time for the preliminary emission from the internal flash is nearly always the same. Thus, it is not necessary to detect the end of preliminary light emission from the internal flash to use it as the trigger for stopping the light emission from the external flash. In other words, the preliminary light emission from the external flash may be otherwise controlled in some other ways such as shown in Fig. 10.

With reference next to Fig. 10, as the internal flash undergoes a preliminary light emission, the emission start signal detecting circuit 45 is activated as explained above and a preliminary emission start signal is outputted and inputted to a timer 53 and preliminary emission signal generating circuit 63. In response, the timer 53 outputs a positive voltage of duration about 0.2 seconds, and transistor 55 within the preliminary emission signal generating circuit 63 becomes switched on, causing transistor 61 to be switched on after a specified length of time by an integrator circuit comprising resistor 56 and capacitor 60, inputting a preliminary emission stop signal to the emission stop signal input circuit 30 and thereby stopping the preliminary emission. In other words, the preliminary emission stop signal from the internal flash is not being utilized.

In Fig. 10, capacitor 54 serves to increase the switched-on time of the transistor 55. Capacitor 52 connected to the timer 53 is for preventing the generation of a stop signal at the time of preliminary emission of the emission stop signal detecting circuit 39 by inputting a signal to transistor 51 to inhibit the circuit. Since this capacitor 52 forms a differential circuit adapted to output a signal only at the time of a rise of the timer 53, it is not activated at the time of the main emission and hence the transistor 51 is not switched on. Thus, there is no inhibit (disablement) and the emission stop signal detecting circuit 39 is activated when the main emission of the internal flash is stopped and a signal is transmitted therefrom.

At the subsequent time of the main light transmission, a delay circuit 62 comprised of transistor 59, capacitor 58 and resistor 57 is switched on by a signal received from the timer 53 to inhibit transistor 61. Thus, no signal is outputted from the preliminary emission signal generating circuit 63 at the time of the main emission but a stop signal is transmitted from the emission stop signal detecting circuit 39 and the normal operation is carried out.

The circuit described above may be replaced by a digital circuit having the same action principle. Alternatively, a microcomputer may be used for the operation.

Such a circuit is convenient when a camera of a specified kind is used because the resistor 56 or the capacitor 60 may be preliminarily adjusted such that the external flash can be made to emit light according to the light emission from the internal flash of a specified camera. Since the preliminary light emission from internal flashes for most kinds of cameras is more or less alike, as explained above, the present invention can be used for many similar cameras of many different kinds.

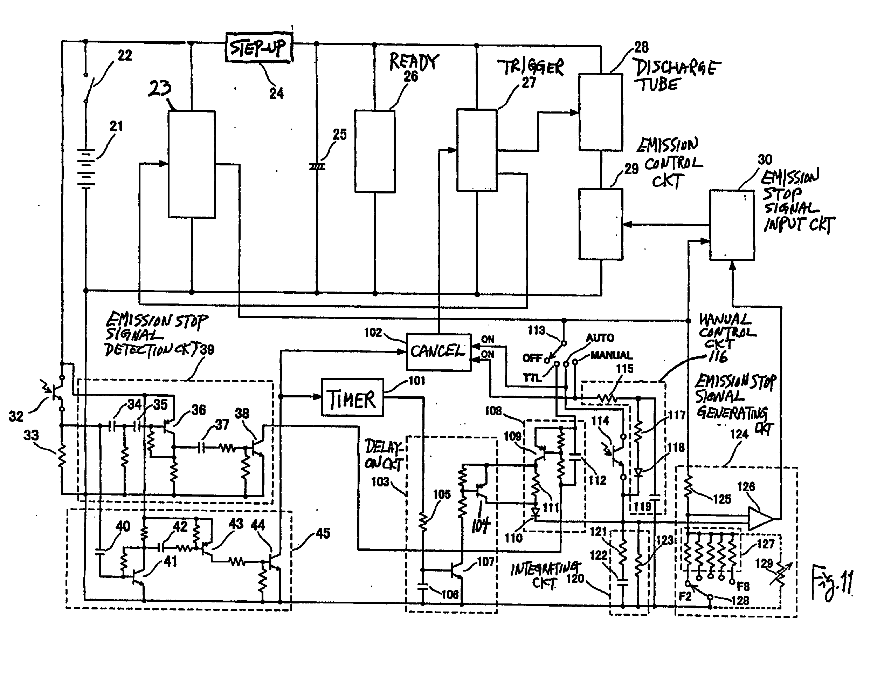

Next, Fig. 11 is referenced to explain another example of preliminary emission starting means of this invention. In Fig. 11, components that are similar or equivalent to those shown in Fig. 4 are indicated for convenience by the same numerals and will not be described repetitiously.

A photo-transistor 32 and a load resistor 33 comprise a light detector circuit, and received light is thereby converted to an electrical signal. This electrical signal is inputted to an emission start signal detecting circuit 45 which is adapted to detect the rise of a signal, serving to detect the rise portion of a signal detected by capacitor 40, to AC- amplify it by transistor 41 and to detect it by transistor 43 through capacitor 42.

As transistor 44 is further used as a buffer to input an emission start signal (as an ON signal) to a trigger 27 circuit, the trigger circuit 27 is thereby activated and the emission of light is started from a discharge tube 28.

As shown in Fig. 5A and explained above with reference to Fig. 4, the time of light emission from the internal flash 6 is very short (as shown at 71 and 72). The stopping of the light emission is effected by a falling signal 72 of light that is transmitted through the optical fiber 8 to the light detector circuit 9 and converted into an electrical signal by the same photo-transistor 32 referred to above. Although the same photo-transistor 32 is used according to the illustrated example for the detection of both the rise and the fall of light signal (or the start and the end of the light emission), two different photo-transistors may be used for the two separate purposes.

Means for stopping emission of light from the external flash 11 a by using the end of this preliminary light emission as the trigger is hereinafter referred to as the preliminary emission stopping means and will be described next more in detail by way of an example.

The falling at the end of the preliminary light emission is detected by an emission stop signal detecting circuit 39, adapted to detect the edge of a falling by means of a differential capacitor 34 and to AC-amplify its signal by transistor 36 through capacitor 35. This AC-amplified signal is detected by transistor 38 through capacitor 37 to form an ON signal.

In Fig. 11, numeral 113 indicates a mode-selecting switch. When the mode-selecting switch 113 is selecting the so-called TTL direct control (for effecting the preliminary emission and the main emission by a signal outputted from the camera), the preliminary emission stop signal is inputted from the emission stop signal detecting circuit 39 to a preliminary emission control circuit 108 to switch on transistor 109 and a voltage from the gate voltage generating circuit 23 is inputted to an integrating circuit 120 through resistor 111 and diode 110 for preventing the reverse current flow. Capacitor 112 is for increasing the switched-on time of the transistor 109.

The integrating circuit 120 is comprised of a speed-up resistor 121 of a known kind, an integrating capacitor 122 and a discharge resistor 123 and the integration process is carried out by resistor 111 and the integrating capacitor 122. When the voltage of the integrating capacitor 122 reaches a specified level, an emission stop signal is outputted from an emission stop signal generating circuit 124 and inputted to the emission stop signal input circuit 30. This signal is further inputted to the light emission control circuit 29 such that the light emission is immediately stopped.

The emission stop signal generating circuit 124 serves also as means for correcting exposure and is comprised of a comparator 126, a resistor 125 for generating a comparison voltage, a resistor group 127 and a voltage-setting switch 128. The resistor group 127 may be replaced by a variable resistor 129. The operating voltage of the comparator 126 may be set within a range of 0.1 V (by setting the switch 128 to the farthest left) to 3V (by setting the switch 128 to the farthest right) such that the preliminary emission control circuit 108 will function if the operating voltage is at the lowest set value (0.1V) and a signal will be outputted immediately from the comparator 126, that is, the integrating circuit 120 becomes 0.1V almost immediately.

In summary, this exposure correcting means is provided with a variable means (an input means) such as the voltage-setting switch 128 which may be gradually rotated to the right such that the operating point of the comparator 126 becomes gradually higher and the output timing of the signal becomes delayed. Thus, as the external flash is activated by this signal, the timing for stopping the light emission from the discharge tube 28 is varied by the exposure correcting means and the waveform of the emitted light from the discharge tube 28 changes as shown in Fig. 12 from 131 to 132 to 133 to 134 to 135. In other words, the value of the resistor 111 and the setting of the integrating circuit 120 are adjusted in an optimum way. Fig. 12 is merely intended to show how the waveform will change, not the optimum waveform itself. The flash time of the waveform 131 is made short because the start of the light emission is delayed for the reason given below but the delay in the stopping of the light emission is small.

Although Fig. 11 shows an example wherein it is a resistor group of a comparator that is varied for the adjustment, this is not intended to limit the scope of the invention. Although not separately shown with an illustration, it goes without saying that many other circuit structures are possible for effecting such an adjustment. For example, the integrating circuit may be provided with a plurality of capacitors from which an adequate one is to be selected for the adjustment. As still another example, a known circuit as shown in Fig. 10 with transistor 61 may be used instead of a comparator for making use of the switched-on characteristics of this transistor 61. A digital circuit or a microcomputer with a similar function may further be used instead for the same purpose.

Effects of the change in the waveform of light emission from the discharge tube 28 as shown in Fig. 12 will be further explained next. In the case of a digital camera of the type which determines the exposure of the main exposure based on the preliminary emission is adapted to measure the amount of reflected light from the target object to be photographed at the time of the preliminary emission and to determine the main exposure based on this measured amount of the reflected light. Thus, if the quantity of light at the time of preliminary emission is reduced from the optimum value, the reflected light from the target object is reduced and the exposure correcting means functions so as to increase the light of quantity at the time of the main emission. Conversely, if the quantity of light at the time of preliminary emission is increased from the optimum value, the reflected light from the target object is increased and the exposure correcting means functions so as to reduce the quantity of light at the time of the main exposure. This principle may be used such that the exposure correction can be effected simply by means of an operating knob on the external flash.

In this case, the timing for stopping the main light emission need not be made variable, unlike the stopping of the preliminary light emission which is made variable as explained above. When the emission stop signal is received for stopping the main light emission, a timer 101 outputs a plus signal for about 0.2 seconds and a delay-on circuit 103 serves to transmit the signal directly without causing any delay.

At the moment of the preliminary light emission of the internal flash, the delay-on circuit 103 does not function because the integration circuit formed by resistor 105 and capacitor 106 prevents any base voltage from being applied to transistors 107 and 104. Thereafter before the time of the main light emission, however, a voltage is applied to the capacitor 106 and the transistors 107 and 104 come to be switched on and the resistor 111 is shorted. Thus, a voltage is immediately generated in the integration circuit 120 at the time of the main emission and there is no time delay.

The aforementioned circuit structure including the timer 101 and the delay-on circuit 103 is only a preferred embodiment. This circuit structure is not intended to limit the scope of the invention and is not intended to be indispensable. In situations where the variable time due to the means for varying the timing of the preliminary light emission is relatively small, for example, its effect may be sufficiently small.

In other aspects, the main emission is similar to the preliminary emission and is stopped as shown by numeral 78 in Fig. 5. In summary, since the waveform of the external flash is corrected according to the waveform of the internal flash, a correct exposure is possible although the light from the internal flash does not reach the target object to be photographed.

Fig. 13 shows an example of the operating portion of the external flash of this invention for underwater photography. Since the shafts of operating knobs must be adequately waterproofed while there is a limited space on the flash, it is preferable to limit the number of operating knobs to be no more than two. Thus, Fig. 13 shows a back surface 99 of an external flash provided with two operating knobs 92 and 96, a battery cover 97 and a ready light 98 for indicating when the battery has been fully charged. Since the available space is limited, it is preferable to provide each of the knobs 92 and 96 with as many functions as possible. Some of these functions will be explained with reference to the circuit diagram of Fig. 11.

As explained above, if the TTL control is selected by the mode-selecting switch 113, the voltage-setting switch 128 functions as an exposure correcting means but there are also automatic and manual control modes that can be selected. According to this invention, this is made possible by using the emission stop signal generating circuit 124 and the integrating circuit 120 in common.

If the automatic (AUTO) control is selected by the mode-selecting switch 113, the aforementioned TTL connection is interrupted but the connection is made instead to a photo-transistor 114 to form an automatic control circuit structure of a conventional type. As is well known, as reflected light of the external flash reflected from a target object to be photographed is received by the photo-transistor 114, the received light is converted into an electrical signal. This electrical signal is integrated by the integrating circuit 120 and when the integrated value reaches a specified value representing a correct exposure, a signal is outputted from the emission stop signal generating circuit 124 and the light emission from the discharge tube 28 is stopped as explained above. If the resistor group 127 is appropriately designed and used in conjunction with the voltage-setting switch 128, a plurality of exposures can be provided.

If the manual (MANUAL) control is selected by the mode-selecting switch 113, a resistor 117 is used instead of the photo-transistor 114. The resistance of this resistor 117 is adjusted to an optimum value and the resistor group 127 of the emission stop signal generating circuit 124 is further varied such that the timing for stopping the light emission from the external flash is modified such that the used quantity of light is gradually changed to an optimum level. Since the variable range cannot be optimized by the resistor 117 alone, a resistor 115 and a capacitor 119 are provided as a manual control circuit 116 to correct the rise portion and a neighboring portion of the waveform of the light emission. Their values may preferably be determined experimentally.

In Fig. 11, numeral 102 indicates a preliminary emission canceling circuit. The preliminary emission canceling circuit 102 does not function when the TTL mode is selected by the mode-selecting switch 113 but is operated when the automatic or manual mode is selected since there is no need for emission of light when the internal flash undergoes the preliminary emission.

According to the example described above, a single knob is required to make a selection out of three available modes. In the example of Fig. 13, the voltage-setting switch 128 is connected to the knob 96 and the mode-selecting switch 113 is connected to the knob 92.

Fig. 13 shows the knob 96 when it is usable for the correction of exposure (93), changing the light quantity in the manual mode of control (94) and changing the light quantity in the automatic mode of control (95). This, however, is not intended to limit the scope of the invention. The knob 96 may be used for a limited number of selections. Fig. 14A shows an example wherein the knob 96 is for the exposure control (93) and the changing of light quantity in the automatic mode of control (95). Fig. 14B shows another example wherein the knob 96 is for the exposure control (93) and the changing of light quantity in the manual mode of control (94). Fig, 14C is still another example wherein the knob 96 is for changing the light quantity in the automatic and manual control (93 and 94). Fig. 14D is a further example wherein the knob 96 is merely for the exposure correction.

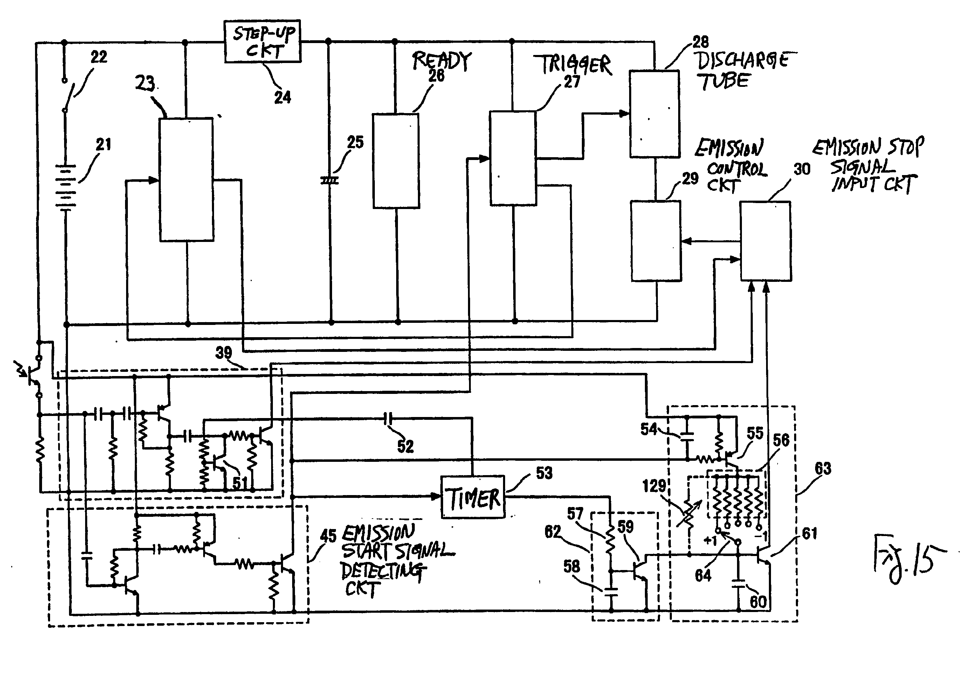

The invention has been described by way of a limited number of examples with different aspects. These examples are not intended to limit the scope of the invention. Many different combinations of these many aspects of the invention are also intended to be within its scope. For example, Fig. 15 shows still another embodiment of the invention, which is similar to the embodiment described above with reference to Fig. 10 but different in that the integrator circuit of the preliminary emission signal generating circuit 63 includes a resistor group 156. In other words, the circuit structure shown in Fig. 10 is intended to control the stopping of the preliminary emission from the external flash by a proper adjustment. According to the circuit structure shown in Fig. 15, the preliminary emission from the external flash is stopped after a preliminarily set time.

As the internal flash undergoes a preliminary light emission, the emission start signal detecting circuit 45 is activated as explained above and a preliminary emission start signal is outputted and inputted to a timer 53 and preliminary emission signal generating circuit 63. In response, the timer 53 outputs a positive voltage of duration about 0.2 seconds. The transistor 55 within the preliminary emission signal generating circuit 63, serving now as exposure correcting means, becomes switched on, causing transistor 61 to be switched on after a specified length of time by an integrator circuit comprising the resistor group 156 and capacitor 60, inputting a preliminary emission stop signal to the emission stop signal input circuit 30 and thereby stopping the preliminary emission. The capacitor 54 serves to increase the switched-on time of the transistor 55.

The resistor group 156 is provided with a resistor-selecting switch 64 and functions as a variable means (input means). As the connected resistor is gradually varied by this means, the timing for stopping the preliminary emission can be varied as described above with reference to Fig. 12.

As explained above with reference to Fig. 10, capacitor 52 connected to the timer 53 is for preventing the generation of a stop signal at the time of preliminary emission of the emission stop signal detecting circuit 39 by inputting a signal to transistor 51 to inhibit the circuit. Since this capacitor 52 forms a differential circuit adapted to output a signal only at the time of a rise of the timer 53, it is not activated at the time of the main emission and hence the transistor 51 is not switched on. Thus, there is no inhibit and the emission stop signal detecting circuit 39 is activated when the main emission of the internal flash is stopped and a signal is transmitted therefrom.

According to this invention, in summary, the marine snow phenomenon can be prevented by using a filter on the inner flash and the aforementioned disadvantages of the prior art technologies can be obviated because the reflected light from of the external flash is measured through the camera lens. Furthermore, the operations of the external flash are made easy while the error in measuring light can be reduced.

## Claims

1. A system comprising:
a digital camera (1) having an internal flash (6), said internal flash being adapted to undergo a preliminary light emission process and subsequently a main light emission process; and
a flash control system (10a) for said digital camera comprising:
an external flash (11a), said external flash being external to said digital camera and adapted to emit light (13) by a signal from a signal detecting means (9) as said signal detecting means receives emitted light from said internal flash (6);
light screening means (7) for preventing light emitted from said internal flash from illuminating a target object (14) to be photographed by said digital camera;
light conducting means (8) for conducting light from said internal flash to said external flash for causing emission of light from said external flash;
preliminary emission starting means (45) for causing said external flash to start preliminary emission of light by using as trigger a light emitting signal when said internal flash starts said preliminary light emission process;
preliminary emission stopping means (39, 30, 29) for causing said external flash to stop said preliminary emission of light by detecting the end of emission of light by said preliminary light emission process of said internal flash as trigger;
main emission starting means (45) for causing said external flash to start main emission of light by using as trigger another light emitting signal when said internal flash starts said main light emission process;
main emission stopping means (39, 30, 29) for causing said external flash to stop said main emission of light by detecting the end of emission of light by said main light emission process of said internal flash as trigger; and
one or more discharge tubes (28, 82, 83) included in the external flash (11a) and selected such that the flash time of the waveform (91) of light emitted therefrom will be at most twice the flash time of the waveform (89) of light emitted from said internal flash wherein said external flash includes either:
a single discharge tube and either no choke coil or a choke coil with inductance less than 20 microhenries; or
a plurality of discharge tubes (82, 83) connected in parallel, and either:
each having an inner diameter of 1.9-2.1 mm and an arc length of 20mm or longer; or
each having an inner diameter of 2.6mm or less and an arc length of 40mm or shorter.

2. The system of claim 1 wherein said digital camera is enclosed inside a waterproof housing (2) and said external flash (11a) is attached to said digital camera outside said housing.

3. The system of claim 1 wherein said external flash (11a) includes means for reducing time duration of the preliminary emission of light therefrom.

## Patentansprüche

1. System umfassend:
eine Digitalkamera (1) mit einem eingebauten Blitz (6), wobei der eingebaute Blitz ausgestaltet ist, einem einleitenden Lichtausstrahlungsverfahren und einem nachfolgenden Hauptlichtausstrahlungsverfahren ausgesetzt zu werden, und
ein Blitzsteuersystem (10a) für die Digitalkamera, umfassend:
einen außenliegenden Blitz (11a), wobei der außenliegende Blitz außerhalb der Digitalkamera ist und ausgestaltet ist, Licht (13) durch ein Signal von einem Signalerfassungsmittel (9) auszustrahlen, während das Signalerfassungsmittel von dem eingebauten Blitz (6) ausgestrahltes Licht empfängt;
Lichtabschirmmittel (7) zum Verhindern, dass von dem eingebauten Blitz ausgestrahltes Licht ein Zielobjekt (14), welches von der Digitalkamera zu fotografieren ist, beleuchtet;
Lichtleitungsmittel (8) zum Leiten von Licht von dem eingebauten Blitz zu dem außenliegenden Blitz, um ein Ausstrahlen von Licht von dem außenliegenden Blitz zu bewirken;
Startmittel (45) für eine einleitende Ausstrahlung, um zu bewirken, dass der außenliegende Blitz durch Verwenden eines Lichtausstrahlungssignals als Auslöser eine einleitende Ausstrahlung von Licht startet, wenn der eingebaute Blitz das einleitende Lichtausstrahlungsverfahren startet;
Anhaltemittel (39, 30, 29) für eine einleitende Ausstrahlung, um zu bewirken, dass der außenliegende Blitz die einleitende Ausstrahlung von Licht durch Erfassen des Endes der Ausstrahlung von Licht von dem einleitenden Lichtausstrahlungsverfahren des eingebauten Blitzes als Auslöser anhält;
Startmittel (45) für eine Hauptausstrahlung, um zu bewirken, dass der außenliegende Blitz eine Hauptausstrahlung von Licht durch Verwenden eines anderen Lichtausstrahlungssignals als Auslöser startet, wenn der eingebaute Blitz das Hauptlichtausstrahlungsverfahren startet;
Anhaltemittel (39, 30, 29) für eine Hauptausstrahlung, um zu bewirken, dass der außenliegende Blitz die Hauptausstrahlung von Licht durch Erfassen des Endes einer Ausstrahlung von Licht von dem Hauptlichtausstrahlungsverfahren des eingebauten Blitzes als Auslöser anhält; und
eine oder mehrere Entladungsröhren (28, 82, 83), welche in dem außenliegenden Blitz (11a) enthalten sind und welche derart ausgewählt sind, dass die Blitzzeit von der Wellenform (91) von davon ausgestrahltem Licht zumindest das doppelte der Blitzzeit von der Wellenform (89) des von dem eingebauten Blitz ausgestrahlten Lichts ist, wobei der außenliegende Blitz entweder enthält:
eine einzelne Entladungsröhre und entweder keine Drosselspule oder eine Drosselspule mit einer Induktanz von weniger als 20 Mikrohenry; oder
mehrere Entladungsröhren (82, 83), welche parallel verbunden sind und entweder:
jeweils einen Innendurchmesser von 1,9-2,1 mm und eine Lichtbogenlänge von 20 mm oder länger aufweisen; oder
jeweils einen Innendurchmesser von 2,6 mm oder weniger und eine Lichtbogenlänge von 40 mm oder weniger aufweisen.

2. System nach Anspruch 1, wobei die Digitalkamera innerhalb eines wasserdichten Gehäuses (2) eingeschlossen ist und der außenliegende Blitz (11a) an der Digitalkamera außerhalb des Gehäuses angebracht ist.

3. System nach Anspruch 1, wobei der außenliegende Blitz (11a) Mittel zum Verringern einer Zeitdauer der einleitenden Ausstrahlung von Licht davon aufweist.

## Revendications

1. Système comprenant :
un appareil photographique numérique (1) ayant un flash interne (6), ledit flash interne étant apte à subir un processus d'émission de lumière préliminaire puis un processus d'émission de lumière principale ; et
un système de commande de flash (10a) pour ledit appareil photographique numérique comprenant :
un flash externe (11a), ledit flash externe étant à l'extérieur dudit appareil photographique numérique et apte à émettre une lumière (13) par un signal à partir d'un moyen de détection de signal (9) lorsque ledit moyen de détection de signal reçoit une lumière émise à partir dudit flash interne (6) ;
un moyen de filtrage de lumière (7) pour empêcher que la lumière émise à partir dudit flash interne n'illumine un objet cible (14) à photographier par ledit appareil photographique numérique ;
un moyen conducteur de lumière (8) pour conduire une lumière à partir dudit flash interne vers ledit flash externe afin de provoquer une émission de lumière à partir dudit flash externe ;
un moyen de commencement d'émission préliminaire (45) pour amener ledit flash externe à commencer une émission de lumière préliminaire en utilisant un signal d'émission de lumière en tant que déclenchement lorsque ledit flash interne commence ledit processus d'émission de lumière préliminaire ;
un moyen d'arrêt d'émission préliminaire (39, 30, 29) pour amener ledit flash externe à arrêter ladite émission de lumière préliminaire en détectant la fin de l'émission de lumière par ledit processus d'émission de lumière préliminaire dudit flash interne en tant que déclenchement ;
un moyen de commencement d'émission principale (45) pour amener ledit flash externe à commencer une émission de lumière principale en utilisant un autre signal d'émission de lumière en tant que déclenchement lorsque ledit flash interne commence ledit processus d'émission de lumière principale ;
un moyen d'arrêt d'émission principale (39, 30, 29) pour amener ledit flash externe à arrêter ladite émission de lumière principale en détectant la fin de l'émission de lumière par ledit processus d'émission de lumière principale dudit flash interne en tant que déclenchement ; et
un ou plusieurs tubes de décharge (28, 82, 83) inclus dans le flash externe (11 a) et sélectionnés de sorte que le temps de flash de la forme d'onde (91) de lumière émise à partir de celui-ci soit égal à aux plus deux fois le temps de flash de la forme d'onde (89) de lumière émise à partir dudit flash interne dans lequel ledit flash externe comprend :
soit un tube de décharge unique et aucune bobine d'arrêt ou une bobine d'arrêt avec une inductance inférieure à 20 microhenries ;
soit une pluralité de tubes de décharge (82, 83) reliés en parallèle, et :
ayant chacun un diamètre intérieur de 1,9 à 2,1 mm et une longueur d'arc de 20 mm ou plus ; ou
ayant chacun un diamètre intérieur de 2,6 mm ou moins et une longueur d'arc de 40 mm ou moins.

2. Système selon la revendication 1, dans lequel ledit appareil photographique numérique est enfermé à l'intérieur d'un logement étanche à l'eau (2) et ledit flash externe (11a) est attaché au dit appareil photographique numérique à l'extérieur dudit logement.

3. Système selon la revendication 1, dans lequel ledit flash externe (11 a) comprend un moyen pour réduire la durée de l'émission de lumière préliminaire à partir de celui-ci.
